# EUROPEAN PATENT APPLICATION

(11) **EP 4 378 910 A1**
(43) Date of publication of application: **05.06.2024**
(21) Application number: 22848387.1
(22) Date of filing: 21.07.2022
(51) Int. Cl.: C04B 35/26, C04B 35/622, H01F 1/01, H01F 41/02

(54) **MN-ZN FERRITE MATERIAL AND PREPARATION METHOD THEREFOR**

(30) Priority: 26.07.2021 CN 202110842324
(71) Applicant: Hengdian Group DMEGC Magnetics Co., Ltd., Jinhua, Zhejiang 322118 (CN)
(72) Inventor: ZHU, Yong, Jinhua, Zhejiang 322118 (CN); WANG, Chaoming, Jinhua, Zhejiang 322118 (CN); ZHANG, Zheng, Jinhua, Zhejiang 322118 (CN)
(74) Representative: De Bonis, Paolo
(86) International application number: PCT/CN2022/106963
(87) International publication number: WO 2023/005782

(57) **Abstract**

Disclosed herein are a Mn-Zn ferrite material and a preparation method therefor. The Mn-Zn ferrite material comprises a main component and an auxiliary component; the main component comprises Fe₂O₃, ZnO and MnO; the auxiliary component comprises CaCO₃, Bi₂O₃ and CoO; on the basis of the total weight of the main component, the content of CoO is 1000-5000 ppm. The preparation method comprises: (1) mixing each member of the main component, then pre-firing, and obtaining a pre-fired mixture; (2) adding each member of the auxiliary component to the pre-fired mixture, and mixing to obtain a ferrite slurry; (3) granulating the ferrite slurry, and pressing and forming after granulation to obtain a manganese-zinc ferrite blank, and (4) sintering and cooling the manganese-zinc ferrite blank to obtain the Mn-Zn ferrite material. The Mn-Zn ferrite material provided in the present application is a material having high magnetic permeability and a low temperature coefficient.

## Description

### TECHNICAL FIELD

Embodiments of the present application relate to the technical field of magnetic materials, for example, a Mn-Zn ferrite material and a preparation method therefor.

### BACKGROUND

In recent years, the manganese-zinc ferrite with high magnetic permeability has been widely used in signal transmission and anti-electromagnetic interference technology. The manganese-zinc ferrite material used for these applications must also maintain stable magnetic permeability in a wide temperature range to ensure that the electronic device works normally in a wide temperature range, generally requiring a stable working temperature range of -40°C to 85°C, but for the military electronic product and the civilian electronic product at extreme environment, it is required to work stably within the temperature range of -55°C to 120°C. In order to obtain a manganese-zinc ferrite material with stable magnetic permeability in a wide temperature range, by the restriction of main component formulation, the addition of additives and the control of sintering process parameters, the majority achieve the improvement of low temperature coefficient of magnetic permeability, especially low-temperature magnetic permeability.

CN101560091A discloses a manganese-zinc ferrite material with wide temperature, low temperature coefficient and high Curie temperature; by limiting a content of iron oxide to 52.5-55mol% and a content of zinc oxide to 10-18mol%, the magnetic permeability of the manganese-zinc ferrite material has a low temperature coefficient at -25°C to 150°C, but whether the magnetic permeability at lower temperature can meet the demand is unknown.

CN101863657A discloses a manganese-zinc ferrite material with wide temperature and high magnetic permeability; by limiting a content of iron oxide to 51-56mol% and a content of zinc oxide to 16-26mol%, the magnetic permeability of the manganese-zinc ferrite material is more than or equal to 5000 at -60°C to 130°C, but the temperature coefficient of the magnetic permeability is high in this temperature range.

CN103588471A discloses a manganese-zinc ferrite material with wide temperature and high magnetic permeability, by limiting a content of iron oxide to 54-55mol% and a content of zinc oxide to 14-15.9mol%, the magnetic permeability of manganese-zinc ferrite material is more than or equal to 5000 at -55 °C to 125 °C, but the magnetic permeability changes greatly with temperature in this temperature range.

### SUMMARY

The following is a summary of the subject described in detail herein. This summary is not intended to limit the protection scope of the claims.

The present application provides a Mn-Zn ferrite material and a preparation method therefor. The Mn-Zn ferrite material provided in the present application is a Mn-Zn ferrite material with high magnetic permeability and low temperature coefficient.

In a first aspect, an embodiment of the present application provides a Mn-Zn ferrite material, and the Mn-Zn ferrite material comprises a main component and an auxiliary component; wherein the main component comprises Fe₂O₃, ZnO and MnO; the auxiliary component comprises CaCO₃, Bi₂O₃ and CoO; and based on a total weight of the main component, CoO has a content of 1000-5000 ppm, such as 1000 ppm, 2000 ppm, 3000 ppm, 4000 ppm or 5000 ppm, etc.

In the temperature range of -55°C to 120°C, the Mn-Zn ferrite material provided in the present application has a low temperature coefficient, and a range of a specific temperature coefficient αµ/µi is 0.5×10⁻⁶-2×10⁻⁶. The Mn-Zn ferrite material provided in the present application has a relatively high Curie temperature, and the Curie temperature is more than 160 °C.

In the Mn-Zn ferrite material provided by the present application, the interaction between the main component and the auxiliary component plays an important role in achieving the above effects, and CoO in the auxiliary component is particularly important. Generally, an anisotropic constant K₁ of spinel ferrite is negative value while the anisotropic constant K₁ of CoO is more than 0. After the addition of Co²⁺, the K₁ value contributed by Co²⁺ decreases sharply with the increase of temperature, so a counteraction point of K₁ = 0 in the temperature range lower than the Curie temperature may be existed, producing a second peak of µi-T curve. The applicant found that the addition of CoO auxiliary component and the synergistic effect with other auxiliary components, as well as the coordination with the main component, are conducive to realizing the high initial magnetic permeability and low temperature coefficient of the Mn-Zn ferrite material.

In the auxiliary component of the Mn-Zn ferrite material provided by the present application, the role of CaCO₃ is to improve grain boundary resistivity, reduce loss and increase Q-value. Bi₂O₃ has a low melting point and can be used as a fluxing agent to reduce sintering temperature, promote the growth of crystalline grain size and increase the initial magnetic permeability.

In the main component of the Mn-Zn ferrite material provided by the present application, Fe₂O₃ and MnO form a mono-component manganese ferrite MnFe₂O₄; wherein Zn²⁺ ion is a non-magnetic ion to occupy A position, and recombined with MnFe₂O₄ to increase a total magnetic moment, which is conducive to improving the initial magnetic permeability.

In the present application, if the content of CoO is too high, the second peak position of µi-T curve will shift to low temperature, thus increasing the temperature coefficient of magnetic permeability; if the content of CoO is too low, the second peak position of µi-T curve will shift towards high temperature, thus increasing the temperature coefficient of magnetic permeability.

As a preferred technical solution of the present application, in the auxiliary component, based on a total weight of the main component, CaCO₃ has a content of 200-2000 ppm, such as 200 ppm, 500 ppm, 1000 ppm, 1500 ppm or 2000 ppm, etc., and Bi₂O₃ has a content of 200-2000 ppm, such as 200 ppm, 500 ppm, 1000 ppm, 1500 ppm or 2000 ppm, etc.

Preferably, the auxiliary component of the Mn-Zn ferrite material further comprises MoOs. The addition of MoOs gives a slower shrinkage rate of the blank, and the pores are more easily discharged, which is conducive to improving a sintering density.

Preferably, based on a total weight of the main component, the MoOs has a content of 0-1000 ppm, such as 0, 100 ppm, 300 ppm, 500 ppm, 700 ppm, 900 ppm or 1000 ppm, etc.

Preferably, in the auxiliary component of the Mn-Zn ferrite material,, based on a total weight of the main component, CaCO₃ has a content of 200-1000 ppm, Bi₂O₃ has a content of 200-1000 ppm, MoOs has a content of 100-500 ppm, and CoO has a content of 2000-4000 ppm.

As a preferred technical solution of the present application, in the main component of the Mn-Zn ferrite material, Fe₂O₃ has a molar percentage of 51-54 mol%, such as 51 mol%, 52 mol%, 53 mol% or 54 mol%, ZnO has a molar percentage of 18.1-26 mol%, such as 18.1 mol%, 20 mol%, 22 mol%, 24 mol% or 26 mol%, etc., and a remainder is MnO.

Preferably, in the main component of the Mn-Zn ferrite material, Fe₂O₃ has a molar percentage of 52-53mol%, ZnO has a molar percentage of 18.1-19mol%, and a remainder is MnO.

In a second aspect, an embodiment of the present application provides a method for preparing a Mn-Zn ferrite material according to the first aspect, and the method comprises the following steps:
(1) mixing each component of a main component and then presintering to obtain a presintered mixture;
(2) adding each component of an auxiliary component into the presintered mixture in step (1), and mixing to obtain a ferrite slurry;
(3) granulating the ferrite slurry in step (2), and performing compression molding after granulation to obtain a manganese-zinc ferrite blank; and
(4) sintering the manganese-zinc ferrite blank in step (3) and cooling to obtain the Mn-Zn ferrite material.

The preparation method provided by the present application is combined with the product formulation to achieve the preparation of the manganese-zinc ferrite material with high magnetic permeability and low temperature coefficient.

In the present application, the presintering in step (1) is to make raw materials have a preliminary solid-phase reaction, which provides the powder material with another opportunity for solid-state reaction, and at the same time, the presintering can reduce a shrinkage rate of the product, which is convenient to control the dimensional accuracy of the product. The sintering in step (4) is to promote the solid-phase reaction of ferric oxide, manganese oxide and zinc oxide to form a spinel phase.

As a preferred technical solution of the present application, the mixing in step (1) is wet mixing.

Preferably, the presintering in step (1) is performed at 800-900°C, such as 800 °C, 820 °C, 840 °C, 860 °C, 880 °C or 900 °C, etc.

Preferably, the presintering in step (1) is performed for 2-3 h, such as 2 h, 2.2 h, 2.4 h, 2.6 h, 2.8 h, or 3 h, etc.

As a preferred technical solution of the present application, the mixing in step (2) is performed in a manner of wet sand-milling mixing.

Preferably, the mixing in step (2) is performed for 100-140 min, such as 100 min, 110 min, 120 min, 130 min or 140 min, etc.

As a preferred technical solution of the present application, the granulation in step (3) is spray granulation.

Preferably, the step (3) further comprises: adding a binder into the ferrite slurry in step (2) and mixing before the granulation.

Preferably, the binder comprises polyvinyl alcohol (PVA).

Preferably, the binder has a content of 1-2 wt% of a total weight of the main component and the auxiliary component, such as 1 wt%, 1.2 wt%, 1.4 wt%, 1.6 wt%, 1.8 wt% or 2 wt%, etc. In the present application, if the binder is too much, the blank will crack during the process of binder removal and sintering; and if the binder is too little, the ferrite particles will crack during the process of compression molding.

As a preferred technical solution of the present application, the sintering in step (4) is performed at 1300-1400°C, such as 1300°C, 1350°C or 1400°C, etc.

Preferably, the sintering in step (4) is performed for 4-10 h, such as 4 h, 5 h, 6 h, 7 h, 8 h, 9 h or 10 h, etc.

Preferably, the sintering in step (4) is performed at an oxygen content of 3-21vol%, such as 3 vol%, 4 vol%, 5 vol%, 6 vol%, 7 vol%, 8 vol%, 9 vol%, 10 vol%, 11 vol%, 12 vol%, 13 vol%, 14 vol%, 15 vol%, 16 vol%, 17 vol%, 18 vol%, 19 vol% or 20 vol%, etc. The oxygen content can be controlled by filling with nitrogen or an inert gas.

As a preferred technical solution of the present application, a method of the sintering in step (4) comprises: sintering at 1300-1400°C for 6-8 h under a nitrogen atmosphere with an oxygen content of 19-21 vol%, and then sintering at 1300-1400°C for 1-2h under a nitrogen atmosphere with an oxygen content of 3-5 vol%. In the present application, an object of this sintering method is that (1) the volatilization of zinc oxide is inhibited; and (2) the manganese-zinc ferrite material with single-phase polycrystalline spinel structure can only be generated by sintering at an equilibrium partial pressure of oxygen..

Preferably, the cooling in step (4) is performed at an equilibrium partial pressure of oxygen.. In the present application, the equilibrium partial pressure of oxygen at different temperature is calculated according to the following formula: lgPO₂ = a-b/T, wherein PO₂ is the value of the oxygen partial pressure, a ranges from 3 to 8, b is a constant, ranging from 14000 to 15000, and T is a thermodynamic temperature.

As a further preferred technical solution of the preparation method in the present application, and the method comprises the following steps:
(1) subjecting each component of a main component to wet mixing and presintering at 800-900°C for 2-3 h to obtain a presintered mixture;
(2) adding each component of an auxiliary component into the presintered mixture in step (1), and performing wet sand-milling mixing for 100-140 min to obtain a ferrite slurry;
(3) adding a binder into the ferrite slurry in step (2) and mixing, performing spray granulation to obtain a ferrite particle, and performing compression molding after spray granulation to obtain a manganese-zinc ferrite blank; and
(4) sintering the manganese-zinc ferrite blank in step (3), and a method of the sintering comprises: sintering at 1300-1400°C for 6-8 h under a nitrogen atmosphere with an oxygen content of 19-21vol%, then sintering at 1300-1400°C for 1-2 h under a nitrogen atmosphere with an oxygen content of 3-5vol%, and then cooling at an equilibrium partial pressure of oxygen to obtain the Mn-Zn ferrite material.

Compared with the related art, embodiments of the present application have the following beneficial effects.
(1) In the temperature range of -55°C to 120°C, the Mn-Zn ferrite material provided in embodiments of the present application has a low temperature coefficient, and a range of a specific temperature coefficient αµ/µi is 0.5×10⁻⁶-2×10⁻⁶. The Mn-Zn ferrite material provided in the present application has a relatively high Curie temperature, and the Curie temperature is more than 160 °C.
(2) Embodiments of the present application realize the preparation of the manganese-zinc ferrite material with high magnetic permeability and low temperature coefficient by controlling the composition and addition amount of the main component and auxiliary component and cooperating with the corresponding preparation method.

After reading and understanding the detailed description, other aspects can be understood.

### DETAILED DESCRIPTION

In order to better illustrate the present application and facilitate the understanding of the technical solutions of the present application, the present application is further described in detail below. However, the following examples are only simple examples of the present application and do not represent or limit the protection scope of the present application, and the protection scope of the present application is subject to the claims.

The following are typical but non-restrictive examples of the present application.

### Example 1

A Mn-Zn ferrite material provided in this example comprises a main component and an auxiliary component, and the main component comprises the following components in mole percentage: 52.0mol% of Fe₂O₃, 29.9mol% of MnO and 18.1mol% of ZnO; based on a total weight of the main component, the auxiliary component comprises the following component contents: 400 ppm of CaCO₃, 400 ppm of Bi₂O₃, 200 ppm of MoOs and 3000 ppm of CoO.

In this example, the Mn-Zn ferrite material is prepared according to the following method:
components of the main component were weighed out, and then mixed evenly by a ball mill, and presintered at 850°C for 2.5 h to obtain a presintered material; each component of the auxiliary component with a formula amount was added into the presintered material, subjected to ball milling in a sand mill for 120 min, and then subjected to spray granulation to obtain a ferrite particle material; the ferrite particle material was pressed into a blank sample with H25 × 15 × 8, sintered at 1360 °C for 7 h under N₂ with an oxygen content of 21vol%, and then sintered at 1360°C for 1.5 h under N₂ with an oxygen content of 4vol%, and cooled at an equilibrium partial pressure of oxygen to obtain a magnetic core (the magnetic core is the Mn-Zn ferrite material).

### Example 2

A Mn-Zn ferrite material provided in this example comprises a main component and an auxiliary component, and the main component comprises the following components in mole percentage: 52.5mol% of Fe₂O₃, 29.0mol% of MnO and 18.5mol% of ZnO; based on a total weight of the main component, the auxiliary component comprises the following component contents: 400 ppm of CaCO₃, 600 ppm of Bi₂O₃, 200 ppm of MoOs and 2000 ppm of CoO.

In this example, the Mn-Zn ferrite material is prepared according to the following method:
components of the main component were weighed out, and then mixed evenly by a ball mill, and presintered at 800-900°C for 2-3 h to obtain a presintered material; each component of the auxiliary component with a formula amount was added into the presintered material, subjected to ball milling in a sand mill for 140 min, and then subjected to spray granulation to obtain a ferrite particle material; the ferrite particle material was pressed into a blank sample with H25 × 15 × 8, sintered at 1340°C for 8 h under N₂ with an oxygen content of 21vol%, and then sintered at 1340°C for 2 h under N₂ with an oxygen content of 3vol%, and cooled was at an equilibrium partial pressure of oxygen to obtain a magnetic core (the magnetic core is the Mn-Zn ferrite material).

### Example 3

A Mn-Zn ferrite material provided in this example comprises a main component and an auxiliary component, and the main component comprises the following components in mole percentage: 53.0mol% of Fe₂O₃, 28.0mol% of MnO and 19.0mol% of ZnO; based on a total weight of the main component, the auxiliary component comprises the following component contents: 200 ppm of CaCO₃, 600 ppm of Bi₂O₃ , 200 ppm of MoOs and 1000 ppm of CoO.

In this example, the Mn-Zn ferrite material is prepared according to the following method:
components of the main component were weighed out, and then mixed evenly by a ball mill, and presintered at 900°C for 2 h to obtain a presintered material; each component of the auxiliary component with a formula amount was added into the presintered material, and subjected to ball milling in a sand mill for 100 min, and then subjected to spray granulation to obtain a ferrite particle material; the ferrite particle material was pressed into a blank sample with H25 × 15 × 8, sintered at 1380 °C for 6 h under N₂ with an oxygen content of 21vol%, and then sintered at 1380 °C for 1 h under N₂ with an oxygen content of 5vol%, and cooled at an equilibrium partial pressure of oxygen to obtain a magnetic core (the magnetic core is the Mn-Zn ferrite material).

### Example 4

A Mn-Zn ferrite material provided in this example comprises a main component and an auxiliary component, and the main component comprises the following components in mole percentage: 52.0mol% of Fe₂O₃, 29.9mol% of MnO and 18.1mol% of ZnO; based on a total weight of the main component, the auxiliary component comprises the following component contents: 700 ppm of CaCO₃, 200 ppm of Bi₂O₃ , 100 ppm of MoOs and 4000 ppm of CoO.

A preparation method of the Mn-Zn ferrite material in this example refers to Example 1.

### Example 5

A Mn-Zn ferrite material provided in this example comprises a main component and an auxiliary component, and the main component comprises the following components in mole percentage: 52.0mol% of Fe₂O₃, 29.9mol% of MnO and 18.1mol% of ZnO; based on a total weight of the main component, the auxiliary component comprises the following component contents: 2000 ppm of CaCO₃ , 1000 ppm of Bi₂O₃ , 500 ppm of MoOs and 4000 ppm of CoO.

A preparation method of the Mn-Zn ferrite material in this example refers to Example 1.

### Example 6

A Mn-Zn ferrite material provided in this example comprises a main component and an auxiliary component, and the main component comprises the following components in mole percentage: 50.5mol% of Fe₂O₃, 34.5mol% of MnO and 15.0mol% of ZnO; based on a total weight of the main component, the auxiliary component comprises the following component contents: 400 ppm of CaCO₃, 400 ppm of Bi₂O₃, 200 ppm of MoOs and 2000 ppm of CoO.

A preparation method of the Mn-Zn ferrite material in this example refers to Example 1.

### Example 7

A Mn-Zn ferrite material provided in this example comprises a main component and an auxiliary component, and the main component comprises the following components in mole percentage: 53.1mol% of Fe₂O₃, 29.9mol% of MnO and 17.0mol% of ZnO; based on a total weight of the main component, the auxiliary component comprises the following component contents: 400 ppm of CaCO₃, 400 ppm of Bi₂O₃ , 200 ppm of MoOs and 1000 ppm of CoO.

A preparation method of the Mn-Zn ferrite material in this example refers to Example 1.

### Comparative Example 1

A Mn-Zn ferrite material provided in this example comprises a main component and an auxiliary component, and the main component comprises the following components in mole percentage: 54mol% of Fe₂O₃, 26.5mol% of MnO and 19.5mol% of ZnO; based on a total weight of the main component, the auxiliary component comprises the following component contents: 400 ppm of CaCO₃, 400 ppm of Bi₂O₃ and 200 ppm of MoOs.

A preparation method of the Mn-Zn ferrite material in this example refers to Example 1.

### Comparative Example 2

A Mn-Zn ferrite material provided in this comparative example differs from Example 1 only in that, based on a total weight of the main component, CoO in the auxiliary component was 5500 ppm.

### Comparative Example 3

A Mn-Zn ferrite material provided in this comparative example differs from Example 1 only in that, based on a total weight of the main component, CoO in the auxiliary component was 500 ppm.

### Test method

The Mn-Zn ferrite materials provided by each example and comparative example are tested as follows:
under conditions of a frequency f of 10 KHz and a voltage U of 0.25 V, different temperature points are selected to test initial magnetic permeability µi in the temperature range of -55°C to 120°C;
under conditions of a frequency f of 10 KHz and a voltage U of 0.25 V, a specific temperature coefficient αµ/µ_{T1}(×10⁻⁶) is tested; where a temperature coefficient αµ = (µ_{T2}-µ_{T1})/µ_{T1}/(T₂-T₁);
under conditions of an H of 1194 A/m and a frequency f of 50 Hz, a saturation magnetic flux density Bs at 25°C and 100°C is tested;
under conditions of a frequency f of 10 KHz and a voltage U of 0.25 V, Curie temperature Tc is tested.

**Table 1 Initial magnetic permeability µi value at different temperatures**

| | -55°C | -25°C | 0°C | 25°C | 55°C | 85°C | 120°C |
|---|---|---|---|---|---|---|---|
| Example 1 | 5320 | 5899 | 6092 | 6151 | 5917 | 6145 | 6526 |
| Example 2 | 5568 | 6223 | 6297 | 6188 | 5839 | 6142 | 6522 |
| Example 3 | 5148 | 5528 | 5605 | 5726 | 5640 | 6000 | 6420 |
| Example 4 | 5058 | 5592 | 5777 | 5622 | 5623 | 5913 | 6320 |
| Example 5 | 4689 | 5102 | 5262 | 5321 | 5075 | 5494 | 5867 |
| Example 6 | 3197 | 3005 | 2936 | 3050 | 3488 | 3466 | 5355 |
| Example 7 | 6430 | 7307 | 5424 | 4420 | 4247 | 4267 | 5000 |
| Comparative Example 1 | 5128 | 5976 | 4988 | 4381 | 4367 | 4602 | 4508 |
| Comparative Example 2 | 5917 | 5463 | 4415 | 3675 | 3977 | 4215 | 4724 |
| Comparative Example 3 | 4122 | 5051 | 5651 | 6145 | 7060 | 6822 | 7991 |

**Table 2**

| | Specific temperature coefficient αµ/µi(×10⁻⁶) | | Curie temperature Tc(°C) | Saturation magnetic flux density (mT) | |
|---|---|---|---|---|---|
| | -55-25°C | 25-120°C | | 25°C | 100°C |
| Example 1 | 0.37 | 0.10 | 167 | 472 | 325 |
| Example 2 | 0.25 | 0.09 | 170 | 480 | 337 |
| Example 3 | 0.27 | 0.22 | 172 | 487 | 346 |
| Example 4 | 0.28 | 0.23 | 167 | 472 | 325 |
| Example 5 | 0.36 | 0.20 | 167 | 472 | 325 |
| Example 6 | -0.18 | 2.61 | 174 | 469 | 342 |
| Example 7 | -0.61 | 0.31 | 191 | 509 | 398 |
| Comparative Example 1 | -0.36 | 0.07 | 181 | 506 | 376 |
| Comparative Example 2 | -0.80 | 0.82 | 167 | 472 | 325 |
| Comparative Example 3 | 1.49 | 0.51 | 167 | 472 | 325 |

Based on the above examples and comparative examples, it can be seen that the Mn-Zn ferrite material provided by the present application realizes the preparation of a manganese-zinc ferrite material with high magnetic permeability and low temperature coefficient by controlling the composition and addition amount of the main component and auxiliary component and cooperating with the corresponding preparation method.

In Example 6, because the content of Fe₂O₃ in the main component is slightly low, the initial magnetic permeability at room temperature is low, less than 5000, and the specific temperature coefficient within the temperature range of 25-120 °C is large.

In Example 7, because the content of ZnO in the main component is slightly low, the initial magnetic permeability at room temperature is reduced, and the initial magnetic permeability within the range of 25-120°C is lower than 5000.

In Comparative Example 1, because CoO is not used in the auxiliary component, the initial permeability in the range of 0-120°C is lower than 5000, and the initial magnetic permeability in the range of -55°C to120 °C changes greatly with temperature.

In Comparative Example 2, because CoO in the auxiliary component is excessive, the second peak position of the µi-T curve shifts to low temperature, thereby reducing rapidly the initial magnetic permeability in the range of -55°C to 25°C with the increase of temperature.

In Comparative Example 3, because CoO in the auxiliary component is insufficient, the second peak position of the µi-T curve shifts to high temperature, thereby increasing rapidly the initial magnetic permeability in the range of -55°C to 55°C with the increase of temperature.

The applicant declares that in the present application, the detailed methods of the present application are described by the above examples, but the present application is not limited to the above detailed methods, that is, it does not mean that the present application must rely on the above detailed methods to be implemented. It should be understood by those skilled in the art that any improvement of the present application, and the equivalent substitution of the selected each raw material, the addition of auxiliary components and the selection of specific methods in the present application shall fall within the protection scope and disclosure scope of the present application.

## Claims

1. A Mn-Zn ferrite material, comprising a main component and an auxiliary component, wherein the main component comprises Fe₂O₃, ZnO and MnO; the auxiliary component comprises CaCO₃, Bi₂O₃ and CoO; and, based on a total weight of the main component, CoO has a content of 1000-5000 ppm.

2. The Mn-Zn ferrite material according to claim 1, wherein in the auxiliary component, based on a total weight of the main component, CaCO₃ has a content of 200-2000 ppm, and Bi₂O₃ has a content of 200-2000 ppm.

3. The Mn-Zn ferrite material according to claim 1 or 2, wherein the auxiliary component of the Mn-Zn ferrite material further comprises MoOs.

4. The Mn-Zn ferrite material according to any one of claims 1 to 3, wherein based on a total weight of the main component, MoOs has a content of 0-1000 ppm.

5. The Mn-Zn ferrite material according to any one of claims 1 to 4, wherein in the auxiliary component of the Mn-Zn ferrite material, based on a total weight of the main component, CaCO₃ has a content of 200-1000 ppm, Bi₂O₃ has a content of 200-1000 ppm, MoOs has a content of 100-500 ppm and CoO has a content of 2000-4000 ppm.

6. The Mn-Zn ferrite material according to any one of claims 1 to 5, wherein in the main component of the Mn-Zn ferrite material, Fe₂O₃ has a molar percentage of 51-54mol%, ZnO has a molar percentage of 18.1-26mol%, and a remainder is MnO;
preferably, in the main component of the Mn-Zn ferrite material, Fe₂O₃ has a molar percentage of 52-53mol%, ZnO has a molar percentage of 18.1-19mol%, and a remainder is MnO.

7. A method for preparing the Mn-Zn ferrite material according to any one of claims 1 to 6, comprising the following steps:
(1) mixing each component of a main component and presintering to obtain a presintered mixture;
(2) adding each component of an auxiliary component into the presintered mixture in step (1), and mixing to obtain a ferrite slurry;
(3) granulating the ferrite slurry in step (2), and performing compression molding after granulation to obtain a manganese-zinc ferrite blank; and
(4) sintering the manganese-zinc ferrite blank in step (3) and cooling to obtain the Mn-Zn ferrite material.

8. The method according to claim 7, wherein in step (1), the mixing is performed in a manner of wet ball-milling mixing.

9. The method according to claim 7 or 8, wherein in step (1), the presintering is performed at 800-900°C.

10. The method according to any one of claims 7-9, wherein in step (1), the presintering is performed for 2-3 h.

11. The method according to any one of claims 7-10, wherein in step (2), the mixing is performed in a manner of wet sand-milling mixing;
preferably, in step (2), the mixing is performed for 100-140 min.

12. The method according to any one of claims 7-11, wherein in step (3), the granulation is spray granulation;
preferably, step (3) further comprises: adding a binder into the ferrite slurry in step (2) and mixing before the granulation;
preferably, the binder comprises polyvinyl alcohol and/or polyvinyl butyral ester;
preferably, the binder has a content of 1-2 wt% of a total weight of the main component and the auxiliary component.

13. The method according to any one of claims 7-12, wherein in step (4), the sintering is performed at 1300-1400°C;
preferably, in step (4), the sintering is performed for 4-10 h;
preferably, in step (4), the sintering is performed at an oxygen content of 3-21vol%.

14. The method according to any one of claims 7-13, wherein in step (4), a method of the sintering comprises: sintering at 1300-1400°C for 6-8 h under a nitrogen atmosphere with an oxygen content of 19-21vol%, and then sintering at 1300-1400°C for 1-2 h under a nitrogen atmosphere with an oxygen content of 3-5vol%;
preferably, in step (4), the cooling is performed at an equilibrium partial pressure of oxygen.

15. The method according to any one of claims 7-14, wherein the method comprises the following steps:
(1) subjecting each component of a main component to wet mixing and presintering at 800-900°C for 2-3 h to obtain a presintered mixture;
(2) adding each component of an auxiliary component into the presintered mixture in step (1), and performing wet sand-milling mixing for 100-140 min to obtain a ferrite slurry;
(3) adding a binder into the ferrite slurry in step (2) and mixing, performing spray granulation to obtain a ferrite particle; and performing compression molding after spray granulation to obtain a manganese-zinc ferrite blank; and
(4) sintering the manganese-zinc ferrite blank in step (3), and a method of the sintering comprises: sintering at 1300-1400°C for 6-8 h under a nitrogen atmosphere with an oxygen content of 19-21vol%, then sintering at 1300-1400°C for 1-2 h under a nitrogen atmosphere with an oxygen content of 3-5vol%, and then cooling at an equilibrium partial pressure of oxygen to obtain the Mn-Zn ferrite material.
